# EUROPEAN PATENT APPLICATION

(11) **EP 4 815 147 A1**
(43) Date of publication of application: **30.09.2026**
(21) Application number: 24927986.0
(22) Date of filing: 01.08.2024
(51) Int. Cl.: H01M 50/244

(54) **BATTERY AND ELECTRIC DEVICE**

(30) Priority: 05.03.2024 CN 202420423505 U
(71) Applicant: Contemporary Amperex Technology Co., Limited, Ningde, Fujian 352100 (CN)
(72) Inventor: YAO, Pengcheng, Ningde, Fujian 352100 (CN); CHEN, Xingdi, Ningde, Fujian 352100 (CN); WANG, Peng, Ningde, Fujian 352100 (CN)
(74) Representative: Kraus & Lederer PartGmbB
(86) International application number: PCT/CN2024/109247
(87) International publication number: WO 2025/185053

(57) **Abstract**

A battery (100) and an electric device. The battery (100) comprises a case (10), battery cells (20), a power distribution box (30) and a support component (40), wherein the battery cells (20) are accommodated in the case (10); the power distribution box (30) is arranged outside the case (10), the power distribution box (30) comprises a housing (31) connected to the case (10) and an electrical component (32) accommodated in the housing (31), and an opening is provided in the end of the housing (31) away from the case (10); and the support component (40) covers the opening and is configured to support an external component (400). The structure of the battery (100) can be simplified, and the space utilization rate thereof is improved.

## Description

### CROSS-REFERENCE TO RELATED APPLICATIONS

The present application claims priority to Chinese Patent Application No. 202420423505.8, filed on March 5, 2024 and entitled "BATTERY AND POWER CONSUMING APPARATUS", which is incorporated herein by reference in its entirety.

### TECHNICAL FIELD

The present application relates to the technical field of batteries, and in particular, to a battery and a power consuming apparatus.

### BACKGROUND

With the development of new energy technologies, batteries are more and more widely used, for example, in mobile phones, notebook computers, battery cars, electric vehicles, electric planes, electric ships, electric toy cars, electric toy ships, electric toy planes, electric tools and the like.

Development of battery technologies should consider design factors in many aspects simultaneously, for example, how to improve the space utilization rate of a battery is an important research direction in the field of batteries.

### SUMMARY

The present application provides a battery and a power consuming apparatus, of which the structure can be simplified and the space utilization rate can be improved.

In a first aspect, an embodiment of the present application provides a battery, which includes a box body, a battery cell, a power distribution box, and a support component. The battery cell is accommodated in the box body. The power distribution box is disposed outside the box body. The power distribution box includes a case connected to the box body and an electrical component accommodated in the case. One end of the case away from the box body is provided with an opening. The support component covers the opening and is configured to support an external component.

In the technical solution of the embodiment of the present application, the battery includes the box body, the battery cell disposed in the box body, the power distribution box disposed outside the box body, and the support component covering the power distribution box. The support component can further provide support for the external component while facilitating maintenance of the power distribution box, that is, the external component can be installed on a cover body of the power distribution box, thereby omitting an original support beam structure and improving the space utilization rate.

According to some of the embodiments of the present application, the support component is configured to support a seat of a vehicle. The support component may be configured to bear the seat, thereby improving the space utilization rate of the entire vehicle.

According to some of the embodiments of the present application, the support component includes a cover plate. The cover plate is provided with a connection portion, and the connection portion protrudes from the cover plate toward one side facing away from the box body. The support component may use a cover plate structure provided with a connection portion. The to-be-born member is directly connected to the cover plate, which can further simplify the structure.

According to some of the embodiments of the present application, the cover plate is provided with a plurality of connection portions. The plurality of connection portions are arranged in an array and disposed at intervals. The connection stability is improved and processing is facilitated.

According to some of the embodiments of the present application, the support component includes the cover plate and a beam structure. The beam structure is stacked on one side of the cover plate facing away from the box body. The structural strength of the support component is further increased by disposing the beam structure, thereby providing stable and reliable support.

According to some of the embodiments of the present application, the beam structure is provided with a plurality of connection holes running through the beam structure along a thickness direction. The external component and the beam structure may be connected by passing fasteners through the connection holes, so that the external component and the beam structure can be easily assembled and disassembled.

According to some of the embodiments of the present application, the beam structure is of a plate-shaped structure and is provided with a protruding portion protruding in a direction away from the cover plate. In the thickness direction, the protruding portion and the cover plate are disposed at an interval. The structural strength of the beam structure is improved by stamping molding.

According to some of the embodiments of the present application, the beam structure is provided with a plurality of protruding portions. The plurality of protruding portions extend along a first direction and are disposed at intervals in a second direction. The first direction, the second direction, and the thickness direction intersect pairwise. The connection holes are provided in the protruding portions. The protruding portions extend in strip shapes parallel to each other, thereby further improving the strength of the beam structure.

According to some of the embodiments of the present application, in the thickness direction, an orthographic projection of the beam structure is located within a contour range of an orthographic projection of the cover plate. The impact of the beam structure on the detachable connection between the cover plate and the case is reduced.

According to some of the embodiments of the present application, the beam structure is integrally formed with the cover plate. The connection stability between the beam structure and the cover plate and the overall structural strength of the support component are improved.

According to some of the embodiments of the present application, the cover plate includes at least one of steel, aluminum, and alloys thereof. A thickness of the cover plate is 0.1 mm to 25 mm. The thickness of the cover plate is increased, thereby improving the overall supporting capability of the support component.

According to some of the embodiments of the present application, the box body includes a bearing plate, a frame body, and a bottom plate. The frame body is connected between the bearing plate and the bottom plate. The power distribution box is disposed on an upper side of the bearing plate. The battery cell is fixed to the bearing plate. Relative movement between the battery cell and the bearing plate when an external impact is received is reduced, so that the structure of the bearing plate is more stable.

According to some of the embodiments of the present application, one side of the battery cell away from the bearing plate is provided with an electrode terminal and/or a pressure relief mechanism. The electrode terminal and the pressure relief mechanism are usually disposed in a protruding manner, so as to reduce mutual interference between the electrode terminal and the bearing plate as well as between the pressure relief mechanism and the bearing plate, and reduce the possibility of pressure affecting the electrode terminal and the pressure relief mechanism when bearing the external component.

In a second aspect, an embodiment of the present application provides a power consuming apparatus, which includes the battery in any one of the embodiments in the first aspect. The battery is configured to provide electric energy.

According to some of the embodiments of the present application, the power consuming apparatus is a vehicle. The support component is configured to bear a structural member in the vehicle, so that the space utilization rate of the entire vehicle can be improved.

According to some of the embodiments of the present application, the box body includes the bearing plate, the frame body, and the bottom plate. The frame body is connected between the bearing plate and the bottom plate. The power distribution box is disposed on the upper side of the bearing plate. The battery cell is fixed to the bearing plate. The bearing plate is at least a part of a floorboard of the vehicle. Components and parts of the vehicle are reduced, an integration level of the vehicle is improved, and an assembly process of the vehicle is simplified.

According to some of the embodiments of the present application, the vehicle includes a seat. The seat is connected to the support component. The support component may be configured to support the seat, thereby improving the space utilization rate of the entire vehicle.

### BRIEF DESCRIPTION OF THE DRAWINGS

Various other advantages and benefits become clear to a person of ordinary skill in the art by reading the following detailed description of preferred implementations. The accompanying drawings are merely used for illustrating the preferred implementations and are not intended to constitute a limitation on the present application. Throughout the accompanying drawings, the same reference numerals are used for representing the same components. In the figures:
FIG. 1 is a simple schematic view of a vehicle according to an embodiment of the present application;
FIG. 2 is an explosive schematic view of a battery according to some embodiments of the present application;
FIG. 3 is a sectional view taken along line A-A' in FIG. 2;
FIG. 4 is an enlarged view of region P in FIG. 3; and
FIG. 5 is an exploded view of a support component according to an embodiment of the present application.

### Reference numerals:

1000-vehicle;
100-battery; 200-controller; 300-motor; 400-external component;
10-box body; 20-battery cell; 30-power distribution box; 40-support component;
11-bearing plate; 12-frame body; 13-bottom plate; 21-electrode terminal; 31-case; 32-electrical component; 41-cover plate; 42-beam structure;
421-connection hole; 422-protruding portion;
X-first direction; Y-second direction; and Z-thickness direction.

### DETAILED DESCRIPTION

Embodiments of technical solutions of the present application will be described in detail below with reference to the accompanying drawings. The following embodiments are only used for describing the technical solutions of the present application more explicitly, and are thus only interpreted as examples, rather than used for limiting the protection scope of the present application.

Unless otherwise defined, meanings of all technical and scientific terms used herein are the same as those commonly understood by a person skilled in the art to which the present application belongs. The terms used herein are merely intended to describe specific embodiments, but are not intended to limit the present application. The terms "including" and "having" and any variants thereof in the specification and claims of the present application and in the description of the accompanying drawings are intended to cover non-exclusive inclusion.

In the description of the embodiments of the present application, the technical terms "first", "second", and the like are only used for distinguishing different objects, and should not be understood as indicating or implying relative importance or implying the number, a specific order, or a primary and secondary relationship of indicated technical features. In the description of the embodiments of the present application, "a plurality of" means two or more, unless otherwise expressly and specifically defined.

"Embodiment" mentioned herein means that particular features, structures, or characteristics described with reference to the embodiment may be included in at least one embodiment of the present application. The term appearing at different positions of the specification may not necessarily refer to the same embodiment or an independent or alternative embodiment that is mutually exclusive with another embodiment. A person skilled in the art explicitly or implicitly understands that the embodiments described herein may be combined with other embodiments.

In the description of the embodiments of the present application, the term "and/or" only refers to an association relationship for describing associated objects and represents that three relationships may be present. For example, A and/or B may represent the presence of the three cases: A alone, both A and B, and B alone. In addition, the character "/" used herein generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the orientation or position relationships indicated by technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on orientation or position relationships shown in the accompanying drawings, and are intended to facilitate the description of the embodiments of the present application and simplify the description only, rather than indicate or imply that the apparatus or element referred to should have a particular orientation or be constructed and operated in a particular orientation, and therefore are not to be interpreted as limitations on the embodiments of the present application.

In the description of the embodiments of the present application, unless otherwise explicitly specified and defined, the technical terms such as "mounting", "connecting", "connection" and "fixing" should be understood in a broad sense. For example, a connection may be a fixed connection, a detachable connection, or an integrated connection; may be a mechanical connection or an electric connection; or may be a direct connection, an indirect connection through an intermediate medium, an internal communication between two elements, or an interaction relationship between two elements. For a person of ordinary skill in the art, the specific meanings of the above terms in the embodiments of the present application may be interpreted according to specific situations.

In the embodiments of the present application, the battery cell may be a secondary battery cell. The secondary battery cell refers to a battery cell of which an active material can be activated by means of charging for further use after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, or the like, which is not limited in the embodiments of the present application.

The battery cell typically includes an electrode assembly. The electrode assembly includes a positive electrode and a negative electrode. In the charge-discharge process of the battery cell, active ions (for example, lithium ions) are intercalated and deintercalated back and forth between the positive electrode and the negative electrode.

In some embodiments, the electrode assembly further includes a separation member. The separation member is disposed between the positive electrode and the negative electrode to play a role in preventing a short circuit between the positive electrode and the negative electrode while allowing active ions to pass through.

In some embodiments, the positive electrode may be a positive electrode plate. The positive electrode plate may include a positive electrode current collector and a positive electrode active material layer disposed on at least one surface of the positive electrode current collector.

As an example, the positive electrode current collector has two opposite surfaces in a thickness direction thereof, and the positive electrode active material layer is disposed on either or both of the two opposite surfaces of the positive electrode current collector.

In some embodiments, the negative electrode may be a negative electrode plate. The negative electrode plate may include a negative electrode current collector and a negative electrode active material layer arranged on at least one surface of the negative electrode current collector.

As an example, the negative electrode current collector may further be filled or/and deposited with a lithium source material, a potassium metal, or a sodium metal. The lithium source material is a lithium metal and/or a lithium-rich material.

In some embodiments, a material of the positive electrode current collector may be aluminum, and a material of the negative electrode current collector may be copper.

In some implementations, the electrode assembly further includes the separation member, and the separation member is disposed between the positive electrode plate and the negative electrode plate.

In some implementations, the separation member is a separator. The type of the separator is not specifically limited in the present application, and any well-known separator with a porous structure having good chemical stability and mechanical stability may be selected.

In some implementations, the separation member is a solid electrolyte. The solid electrolyte is disposed between the positive electrode plate and the negative electrode plate, and plays the roles of transmitting ions and isolating the positive electrode and the negative electrode at the same time.

In some implementations, the battery cell further includes an electrolyte. The electrolyte plays the role of transmitting ions between the positive electrode and the negative electrode. The type of the electrolyte is not specifically limited in the present application, which may be selected according to demands. The electrolyte may be liquid, gelled, or solid.

In some implementations, the liquid electrolyte includes an electrolyte salt and a solvent.

The gelled electrolyte includes a framework network with a polymer as the electrolyte, in combination with an ion liquid-lithium salt.

The solid electrolyte includes a polymer solid electrolyte, an organic solid electrolyte, or a composite solid electrolyte.

As an example, the composite solid electrolyte is formed by adding an inorganic solid electrolyte filler to a polymer solid electrolyte.

In some embodiments, the electrode assembly has a wound structure. The positive electrode plate and the negative electrode plate are wound into wound structures.

In some implementations, the electrode assembly has a laminated structure.

As an example, a plurality of positive electrode plates and a plurality of negative electrode plates may be respectively arranged, and the plurality of positive electrode plates and the plurality of negative electrode plates are arranged in an alternately stacked manner.

As an example, a plurality of positive electrode plates may be arranged, the negative electrode plate may be folded to form a plurality of folding segments that are stacked, and one positive electrode plate is sandwiched between the adjacent folding segments.

As an example, the positive electrode plate and the negative electrode plate are both folded to form a plurality of folding segments that are stacked.

As an example, a plurality of separation members may be arranged, which are respectively arranged between any adjacent positive electrode plates or negative electrode plates.

As an example, the separation members may be consecutively arranged between any adjacent positive electrode plates or negative electrode plates by means of folding or winding.

In some implementations, a shape of the electrode assembly may be cylindrical, flat, polygonal prism-shaped, or the like.

In some implementations, the electrode assembly is provided with tabs, and the tabs may conduct a current out from the electrode assembly. The tabs include a positive tab and a negative tab.

In some implementations, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of another shape. The prismatic battery cell includes a square-shell battery cell, a blade-shaped battery cell, or a polygonal prism-shaped battery. The polygonal prism-shaped battery is, for example, a hexagonal prism-shaped battery.

The battery mentioned in the embodiments of the present application refers to a single physical module that includes one or more battery cells to provide a higher voltage and capacity.

In some embodiments, the battery may be a battery module. When a plurality of battery cells are provided, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may serve as a part of a chassis structure of a vehicle. For example, a part of the box body may become at least a part of a floorboard of the vehicle, or a part of the box body may become at least a part of a cross beam and a longitudinal beam of the vehicle.

In some embodiments, the battery may be an energy storage apparatus. The energy storage apparatus includes an energy storage container, an energy storage electric cabinet, or the like.

With the development of battery technologies, electrically driven vehicles in the market are gradually increased. In vehicles, how to improve the space utilization rate and the structural simplification degree are key research issues. Seats are usually disposed in an existing vehicle. The seats are fixed on a support beam, and are born and fixed by the support beam. The support beam is usually connected to a side beam at a side wall of a vehicle body and/or another position on a bottom support structure, and usually spans above a battery.

However, the support beam of the seat spanning above the battery results in a large space required by the structural assembly supporting the seats and a low space utilization rate in this region, which is not beneficial to improving the overall space utilization rate of the vehicle.

In view of this, an embodiment of the present application provides a technical solution. In this technical solution, the battery is provided with a power distribution box and a support component disposed at an opening of the power distribution box. The support component used as a cover of the power distribution box is also used as a support structure for an external component, so that the external component such as the seat can be directly disposed on the battery, thereby omitting the original support beam structure spanning above the battery and effectively improving the space utilization rate.

The technical solution described in the embodiments of the present application is applicable to a battery and a power consuming apparatus using the battery. The power consuming apparatus is, for example, a mobile phone, a portable device, a notebook computer, a battery car, an electric vehicle, a ship, a spacecraft, an electric toy, and an electric tool. The spacecraft is, for example, an airplane, a rocket, a space shuttle, and a spaceship. The electric toy includes, for example, a fixed or mobile electric toy, such as a game machine, an electric vehicle toy, an electric ship toy and an electric aircraft toy. The electric tool includes, for example, a metal cutting electric tool, a grinding electric tool, an assembling electric tool, and a railway electric tool, such as an electric drill, an electric grinder, an electric wrench, an electric screwdriver, an electric hammer, an impact electric drill, a concrete vibrator, and an electric planer.

The battery cell described in the embodiments of the present application is applicable to the above-mentioned power consuming apparatus. However, for the sake of brevity, an electric vehicle will be taken as an example for illustration in the following embodiments.

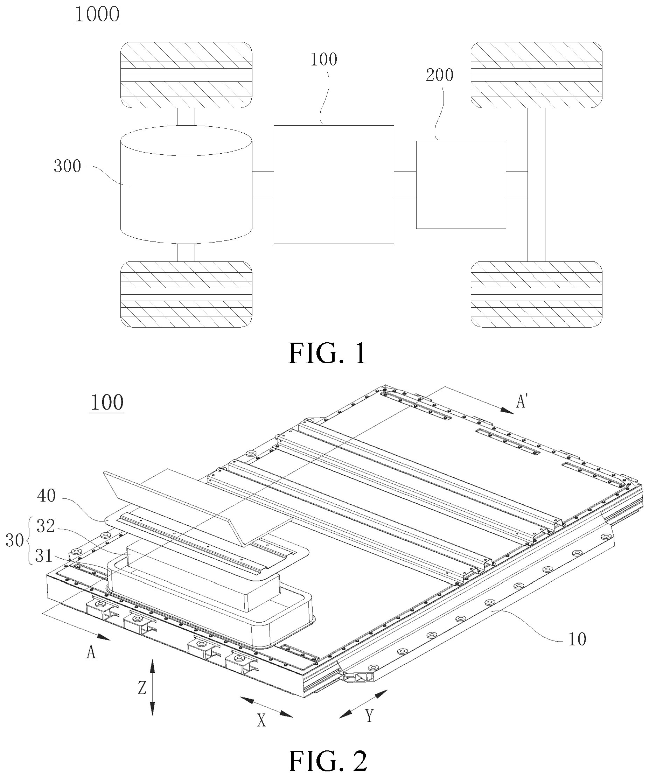

Referring to FIG. 1, FIG. 1 is a simple schematic view of a vehicle 1000 according to an embodiment of the present application. The vehicle 1000 may be a fuel vehicle, a gas vehicle, or a new energy vehicle. The new energy vehicle may be an all-electric vehicle, a hybrid electric vehicle, a range-extended electric vehicle, or the like. The vehicle 1000 may be internally provided with a battery 100. For example, the battery 100 may be disposed at the bottom, head, or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is, for example, configured to control the battery to supply power to the motor 300. The battery may be used for the start and navigation of the vehicle 1000. Certainly, the battery 100 may also be used for driving the vehicle 1000 to travel, and replace or partially replace fuel or natural gas to provide driving for the vehicle 1000.

In the battery 100, one or more battery cells 20 may be provided. If a plurality of battery cells 20 are provided, the plurality of battery cells 20 may be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in a box body 500. Certainly, alternatively, a battery module may be first formed by a plurality of battery cells 20 that are connected in series, parallel, or series-parallel, and a plurality of battery modules are then connected in series, parallel, or series-parallel to form a whole and to be accommodated in the box body 500.

In some embodiments, a plurality of battery cells 20 are provided, and the plurality of battery cells 20 are first connected in series, parallel, or series-parallel to form a battery module. A plurality of battery modules are then connected in series, parallel, or series-parallel to form a whole and to be accommodated in the box body 500.

Next, the structure of the battery 100 is described with reference to FIG. 2 to FIG. 5.

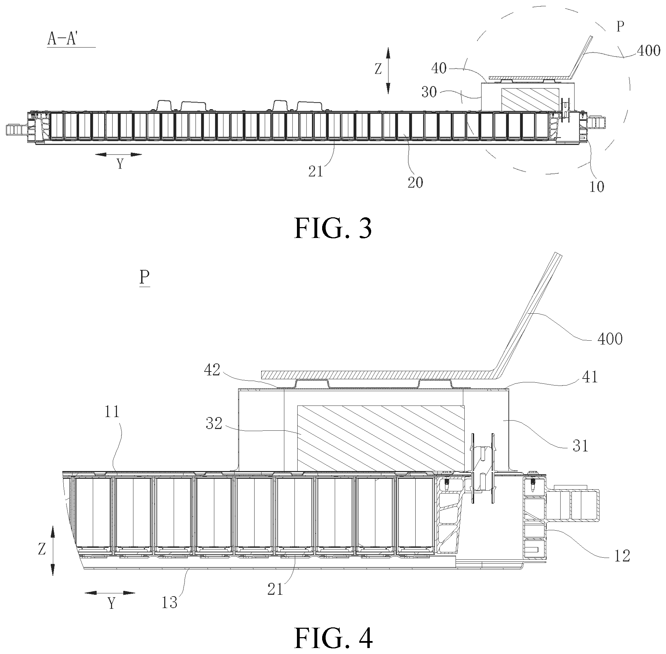

Referring to FIG. 2 to FIG. 4, FIG. 2 is an explosive schematic view of a battery according to some embodiments of the present application, FIG. 3 is a sectional view taken along line A-A' in FIG. 2, and FIG. 4 is an enlarged view of region P in FIG. 3.

In a first aspect, an embodiment of the present application provides a battery 100, which includes a box body 10, a battery cell 20, a power distribution box 30, and a support component 40. The battery cell 20 is accommodated in the box body 10. The power distribution box 30 is disposed outside the box body 10. The power distribution box 30 includes a case 31 connected to the box body 10 and an electrical component 32 accommodated in the case 31. One end of the case 31 away from the box body 10 is provided with an opening. The support component 40 covers the opening and is configured to support an external component 400.

The present application provides a battery 100, which includes a box body 10, a plurality of battery cells 20 disposed in the box body 10, a high-voltage power distribution box 30 configured to perform electric power distribution for the battery cells 20, and a support component 40 configured to support an external component 400.

Specifically, the box body 10 may include a top plate and a bottom plate that are oppositely disposed in a thickness direction Z, and a wall portion connected between the top plate and the bottom plate. The top plate, the bottom plate, and the wall portion jointly enclose to form an accommodating cavity. The battery cells 20 are disposed in the accommodating cavity. The plurality of battery cells 20 may be sequentially arranged along a length direction of the box body 10. Alternatively, the plurality of battery cells 20 may form a plurality of battery modules, and then the battery modules are arranged in the accommodating cavity in an array.

The power distribution box 30 is disposed outside the box body 10 and connected to the box body 10. The power distribution box 30 includes a case 31 and an electrical component 32 disposed inside the case 31. The case 31 and the box body 10 may be connected by means of adhesive connection, welding connection, detachable connection, or integral forming. An accommodating cavity having a relatively small volume is also formed inside the case 31. One side of the relatively small accommodating cavity facing away from the box body 10 is provided with an opening. In addition, the volume of the small accommodating cavity should be slightly greater than a volume of the electrical component 32, so as to facilitate installation while saving space. Optionally, the electrical component 32 may be a high-voltage power distribution module of the battery 100 and communicate with the battery cells 20.

The support component 40 covers the opening communicating with the small accommodating cavity and may close the opening. While providing protection for the electrical component 32, the support component 40 can further be connected to the external component 400 and support and fix the external component. Specifically, a shape and a size of the support component 40 may be matched with a shape and a size of the opening of the case 31, and a connection structure may be provided in the support component 40, so as to facilitate connection to the external component 400.

Optionally, the support component 40 may have certain structural strength, so that the support component can provide stable and reliable support for the external component 400. A preset load bearing limit of the support component may be greater than or equal to 300 kg. The support component 40 may be detachably connected to the case 31. The foregoing opening is applied as a maintenance opening of the power distribution box 30, and the support component 40 is used as a maintenance cover. Therefore, the electrical component 32 can be repaired or replaced without completely disassembling the battery 100 and only by disassembling the support component 40, thereby improving the maintenance efficiency and reducing the maintenance costs.

The support component 40 in the embodiment of the present application can further provide support for the external component 400 while facilitating maintenance of the power distribution box 30, that is, the external component 400 can be installed on a cover body of the power distribution box 30, thereby omitting an original support beam structure and improving the space utilization rate.

In some optional embodiments, the support component 40 is configured to support a seat of a vehicle.

In an embodiment in which the battery 100 is applied to a vehicle, the external component 400 may be a seat in the vehicle, and the seat may be a front seat or a rear seat according to disposition positions of the power distribution box 30 and the support component 40 in the battery 100. Optionally, a bottom plate of the seat of the vehicle and the support component 40 may be detachably connected to each other.

The support component 40 is applied to support the seat in the vehicle, so that the original support component used for supporting the seat can be omitted, thereby effectively improving the space utilization rate of the entire vehicle.

In some optional embodiments, the support component 40 includes a cover plate 41. The cover plate 41 is provided with a connection portion, and the connection portion protrudes from the cover plate 41 toward one side facing away from the box body 10.

The support component 40 may be in a structural form in which the cover plate 41 is provided and the connection portion is directly disposed on the cover plate 41. The connection portion may be in a form of a connection hole, a bearing portion with partial structural reinforcement, a snap-fit end protruding in a direction away from the case 31, or the like. The external component 400 may be mounted to the connection portion by using a fastener or another connection member in a structural form corresponding to the connection portion. Optionally, the cover plate 41 may be a plate-shaped member extending along a plane, and is detachably connected to the case 31.

The support component 40 is in a structural form of the cover plate 41 having the connection portion, so that the to-be-born external component 400 can be directly connected to the cover plate 41, thereby further simplifying the structure, reducing the costs, and further saving the space.

In some optional embodiments, the cover plate 41 is provided with a plurality of connection portions. The plurality of connection portions are arranged in an array and disposed at intervals.

The cover plate 41 may be provided with a plurality of connection portions simultaneously, and the connection portions may use a same structural form and have a same height in the thickness direction Z, so as to facilitate connection and positioning of the external component 400. The connection portions may be sequentially arranged along a particular direction, or the connection portions may be arranged in an array. Optionally, the connection portions may be disposed at equal intervals, so that the connection between the cover plate 41 and the external component 400 is more stable and reliable.

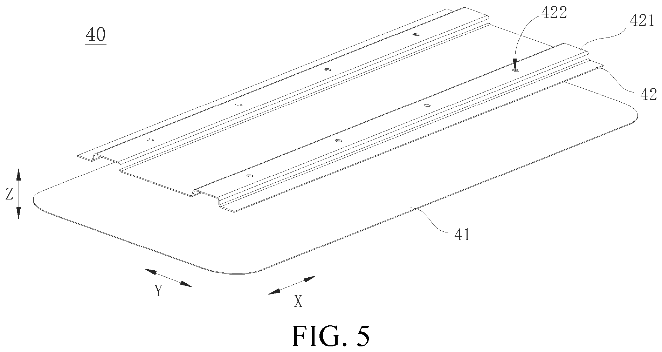

Referring to FIG. 5, FIG. 5 is an exploded view of a support component 40 according to an embodiment of the present application. In some optional embodiments, the support component 40 includes the cover plate 41 and a beam structure 42. The beam structure 42 is stacked on one side of the cover plate 41 facing away from the box body 10.

In some optional embodiments, the beam structure 42 is provided with a plurality of connection holes 421 running through the beam structure along the thickness direction Z.

The support component 40 may be in a structure form in which the cover plate 41 and the beam structure 42 are combined. The cover plate and the beam structure are stacked. The cover plate 41 covers the opening of the case 31. The beam structure 42 is connected to one side of the cover plate 41 facing away from the case 31. The beam structure 42 and the cover plate 41 may be made of a same material, and a thickness of the beam structure 42 is less than or equal to a thickness of the cover plate 41. The beam structure 42 is provided with a plurality of connection holes 421. The connection holes 421 run through the beam structure 42 along the thickness direction Z. The connection holes 421 may be arranged in an array and disposed at equal intervals. The connection hole 421 may be a circular hole, so that the fastener can pass through the connection hole 421 and connect the beam structure 42 to the external component 400.

By disposing the beam structure 42, the overall structural strength of the support component 40 can be further increased, thereby providing stable and reliable support. In addition, the cover plate 41 can maintain good sealing performance and provide good protection for the electrical component 32, thereby further improving the overall reliability of the battery 100. By providing the connection holes 421 in the beam structure 42, the fastener can pass through the connection hole 421 for installation and fixation, thereby facilitating the assembly and disassembly between the beam structure 42 and the external component 400, and reducing the disassembly and maintenance costs.

In some optional embodiments, the beam structure 42 is of a plate-shaped structure and is provided with a protruding portion 422 protruding in a direction away from the cover plate 41. In the thickness direction Z, the protruding portion 422 and the cover plate 41 are disposed at an interval.

The beam structure 42 may be of a bumpy and non-planar plate-shaped structure as a whole. The plate-shaped structure is stacked with the cover plate 41, and is provided with the protruding portion 422 protruding toward an upper side, that is, the side away from the cover plate 41. A gap exists between the protruding portion 422 and the cover plate 41, and the protruding portion and the cover plate are disposed at an interval, which may be 5 mm to 10 mm in the thickness direction Z. The protruding portion 422 may be formed on the beam structure 42 by stamping molding.

Setting the beam structure 42 to have the protruding portion 422 can improve the structural strength of the beam structure 42.

In some optional embodiments, the beam structure 42 is provided with a plurality of protruding portions 422. The plurality of protruding portions 422 extend along a first direction X and are disposed at intervals in a second direction Y. The first direction X, the second direction Y, and the thickness direction Z intersect pairwise. The connection holes 421 are provided in the protruding portions 422.

The beam structure 42 may be provided with a plurality of protruding portions 422 simultaneously. The protruding portions 422 may have a strip shape with a uniform width and extend along the first direction X. The protruding portions 422 may have a same width and are disposed at equal intervals in the second direction Y. The plurality of connection holes 421 in the beam structure 42 may all be provided in the protruding portions 422, so that a fixing member can be disposed at the interval between the protruding portion 422 and the cover plate 41.

Optionally, the beam structure 42 may be provided with two or more protruding portions 422. In this case, the two protruding portions 422 may be each provided with the connection holes 421, and the quantity of the connection holes 421 may be the same. Optionally, the beam structure 42 may be provided with three or more protruding portions 422. In this case, the connection holes 421 may be respectively provided in the three protruding portions 422. Alternatively, the connection holes 421 may be provided in two of the protruding portions 422. The two protruding portions 422 provided with the connection holes 421 may be located at two side edges in the second direction Y.

The 422 protruding portions are enabled to extend in a strip shape parallel to each other, so that the overall structural strength of the beam structure 42 can be further improved, and an accommodating space can be provided for the fasteners connecting the beam structure 42 to the external component 400.

In some optional embodiments, in the thickness direction Z, an orthographic projection of the beam structure 42 is located within a contour range of an orthographic projection of the cover plate 41.

The support component 40 in the present application is also used as an upper cover of the power distribution box 30 to cover the opening of the case 31, thereby providing support while shielding and sealing the electrical component 32. The cover plate 41 may be detachably connected to the case 312, so as to repair or replace the electrical component 32 without disassembling the battery 100 in a large scale. In the thickness direction Z, the orthographic projection of the beam structure 42 may be located within the contour range of the orthographic projection of the cover plate 41. That is, an area of the orthographic projection of the beam structure 42 on the cover plate 41 should be less than or equal to an area of the cover plate 41, so that the cover plate 41 can be conveniently disassembled.

In some optional embodiments, the beam structure 42 is integrally formed with the cover plate 41.

The beam structure 42 and the cover plate 41 may be connected by means of adhesive connection, welding connection, or detachable connection using a fastener, or may be integrally formed, optionally integrally formed by casting. By integrally forming the beam structure 42 and the cover plate 41, the connection stability between the beam structure and the cover plate and the overall structural strength of the support component can be improved.

In some optional embodiments, the cover plate 41 includes at least one of steel, aluminum, and alloys thereof. A thickness of the cover plate 41 is 0.1 mm to 25 mm.

The cover plate 41 is configured to support the external component 400. To enable the cover plate 41 to have certain structural strength, the cover plate 41 may be made of a metal material, which is optionally steel, aluminum, or an aluminum alloy, and may be made of a material the same as that of the box body 10. The thickness of the cover plate 41 is 0.1 mm to 25 mm, and optionally, is one of 0.1 mm, 5 mm, 10 mm, 15 mm, 20 mm, and 25 mm. The specific numerical value may be selected according to the material and the structure of the cover plate 41. Exemplarily, in an embodiment in which the cover plate 41 is made of a material having relatively high strength, the cover plate 41 may have a relatively small thickness. In an embodiment in which the cover plate is made of a material having a relatively low strength, the cover plate 41 may have a relatively large thickness.

Optionally, the thickness of the cover plate 41 may be selected according to a weight of the battery 100. Exemplarily, the thickness of the cover plate 41 is denoted as H and the total weight of the battery 100 is denoted as M, then 0.0001 ≤ H/M ≤ 5, optionally, 0.0005 ≤ H/M ≤ 0.5. If the ratio is excessively large, it indicates that the cover plate 41 has an excessively large weight, which easily causes the overall energy density of the battery 100 to decrease. If the ratio is excessively small, it indicates that the cover plate 41 has an excessively small strength, and is easy to be deformed in a process of making the external component 400, resulting in degradation of the overall reliability of the battery 100.

By increasing the thickness of the cover plate 41, the overall supporting capability of the support component 40 can be improved, thereby improving the overall reliability of the battery 100.

In some optional embodiments, the box body 10 includes a bearing plate 11, a frame body 12, and a bottom plate 13. The frame body 12 is connected between the bearing plate 11 and the bottom plate 13. The power distribution box 30 is disposed on an upper side of the bearing plate 11. The battery cell 20 is fixed to the bearing plate 11.

The box body 10 may be formed by the bearing plate 11 at an upper side, the bottom plate 13 at a lower side, and the frame body 12 connected between the bearing plate and the bottom plate. The power distribution box 30 is disposed on the upper side of the bearing plate 11, that is, the side facing away from the frame body 12. At the same time, the battery cell 20 is fixedly connected to a lower side of the bearing plate 11, that is, the side facing away from the power distribution box 30. In the thickness direction Z, orthographic projections of the power distribution box 30 and the battery cell 20 may partially overlap. Optionally, the battery cell 20 may be adhesively connected to the bearing plate 11, so as to simplify the process and make the connection stable. A plurality of battery cells 20 may be arranged in an array and respectively connected to the bearing plate 11.

The box body 10 is configured to accommodate the battery cell 20. Optionally, the box body 10 may be of various structures. In some embodiments, the bearing plate 11 and the frame body 12 may be integrally formed, or the bottom plate 13 and the frame body 12 may be integrally formed, and the integrally formed hollow structure having an opening at one end covers the other one of the three, jointly enclosing to form the accommodating cavity in which the battery cell 20 is disposed. Alternatively, the frame body 12 may include two sub-portions that are respectively integrally formed with the bearing plate 11 and the bottom plate 13, and two hollow structures with an opening at one end and the openings facing each other are formed in the thickness direction Z. The two hollow structures jointly enclose to form the accommodating cavity in which the battery cell 20 is disposed. Optionally, the frame body 12 may be in various shapes, such as a cylinder or a cuboid.

Connecting the battery cell 20 to the bearing plate 11 can reduce relative movement between the battery cell 20 and the bearing plate 11 when an external impact is received, so that the structure of the bearing plate 11 is more stable.

In some optional embodiments, one side of the battery cell 20 away from the bearing plate 11 is provided with an electrode terminal 21 and/or a pressure relief mechanism.

One of two opposite side surfaces of the battery cell 20 in the thickness direction Z may be provided with the electrode terminal 21 and/or the pressure relief mechanism. The electrode terminal 21 and the pressure relief mechanism are disposed at an interval, and are both disposed on the side away from the bearing plate 11.

The electrode terminal 21 and the pressure relief mechanism on the battery cell 20 are usually disposed in a protruding manner, so as to reduce mutual interference between the electrode terminal and the bearing plate as well as between the pressure relief mechanism and the bearing plate, and reduce the possibility of pressure affecting the electrode terminal and the pressure relief mechanism when bearing the external component 400.

In a second aspect, an embodiment of the present application provides a power consuming apparatus, which includes the battery 100 in any one of the embodiments in the first aspect. The battery 100 is configured to provide electric energy.

In some optional embodiments, the power consuming apparatus is a vehicle.

Optionally, the power consuming apparatus is a vehicle. The battery 100 is disposed at a position close to a chassis of the entire vehicle to provide electric energy for the vehicle, so as to drive the vehicle to travel and/or provide energy for auxiliary components such as a dashboard in the vehicle.

The power consuming apparatus applying the aforementioned battery 100 may be the vehicle. A component that needs to be supported in the vehicle is disposed on the support component 40, so that support structures required for fixing the to-be-supported component can be reduced, thereby improving the space utilization rate of the vehicle.

In some optional embodiments, the box body 10 includes the bearing plate 11, the frame body 12, and the bottom plate 13. The bearing plate 11 is at least a part of a floorboard of the vehicle.

The box body 10 may be formed by the bearing plate 11 at an upper side, the bottom plate 13 at a lower side, and the frame body 12 connected between the bearing plate and the bottom plate. The bearing plate 11 may be used as a part of the floorboard of the vehicle. Specifically, regions on the upper side of the bearing plate 11 other than the region provided with the power distribution box 30 may be used as the floorboard, and another buffer or protection layup structure may be provided at an upper side of the bearing plate 11.

By using the bearing plate 11 as the bottom plate of the vehicle, the integration level of the vehicle can be improved, and the assembly process of the vehicle can be simplified.

In some optional embodiments, the vehicle includes a seat. The seat is connected to the support component 40.

In the power consuming apparatus, the to-be-supported external component 400 assembled the support component 40 may be the seat, and the bottom plate of the seat is detachably connected to the support component 40. In an embodiment in which the bearing plate 11 at least partially serves as the bottom plate of the vehicle, the power distribution box 30 is disposed below the support component 40, that is, disposed below the seat, and regions of the bearing plate 11 other than the region provided with the power distribution box may be used as the bottom plates between the seats.

Optionally, a side edge region of the vehicle may be provided with a side edge beam configured to provide lateral support. The seat may be connected not only to the support component 40, but also to the side edge by using an auxiliary support beam. By means of lateral auxiliary support, the pressure on the power distribution box 30 and the support component 40 is reduced, thereby further improving the reliability of the battery 100 and the entire vehicle.

The support component 40 may be configured to support a seat, so that an original cross beam supporting the seat can be omitted, thereby further improving the space utilization rate of the entire vehicle.

The present application provides the battery 100, which includes the box body 10, the battery cell 20 disposed in the box body 10, the power distribution box 30 disposed outside the box body 10, and the support component 40 disposed on the power distribution box 30. The power distribution box 30 includes the case 31 connected to the box body 10 and the electrical component 32 accommodated in the case 31. The end of the case 31 away from the box body 10 is provided with the opening. The support component 40 covers the opening and is configured to support the external component 400. The external component 400 may be a seat of a vehicle. The support component 40 includes the cover plate 41 and the beam structure 42 that are integrally formed. The beam structure 42 is stacked on the side of the cover plate 41 facing away from the box body 10. The beam structure 42 is plate-shaped and is provided with the protruding portion 422 protruding in the direction away from the cover plate 41. The protruding portion 422 and the cover plate 41 are disposed at an interval. The protruding portion 422 is provided with the plurality of connection holes 421 running through the beam structure along the thickness direction Z.

Finally, it should be noted that the above embodiments are only used for illustrating the technical solution of the present application, rather than for limiting. Although the present application has been described in detail with reference to the above embodiments, it should be understood by a person of ordinary skill in the art that the technical solution described in the above embodiments can still be modified or some or all of the technical features thereof can be equivalently replaced. However, these modifications or substitutions do not depart the essence of the corresponding technical solution from the scope of the technical solutions of the embodiments of the present application, and should be covered in the scope of the claims and specification of the present application. In particular, the various technical features mentioned in the various embodiments can be combined in any way provided that there is no structural conflict. The present application is not limited to the specific embodiments disclosed herein, but includes all technical solutions that fall within the scope of the claims.

## Claims

1. A battery, comprising:
a box body;
a battery cell, accommodated in the box body;
a power distribution box, disposed outside the box body, wherein the power distribution box comprises a case connected to the box body and an electrical component accommodated in the case, and one end of the case away from the box body is provided with an opening; and
a support component, covering the opening and configured to support an external component.

2. The battery according to claim 1, wherein the support component is configured to support a seat of a vehicle.

3. The battery according to claim 1, wherein the support component comprises a cover plate, the cover plate is provided with a connection portion, and the connection portion protrudes from the cover plate toward one side facing away from the box body.

4. The battery according to claim 3, wherein the cover plate is provided with a plurality of the connection portions, and the plurality of connection portions are arranged in an array and disposed at intervals.

5. The battery according to claim 1, wherein the support component comprises a cover plate and a beam structure, and the beam structure is disposed on one side of the cover plate facing away from the box body.

6. The battery according to claim 5, wherein the beam structure is provided with a plurality of connection holes running through the beam structure along a thickness direction.

7. The battery according to claim 6, wherein the beam structure is plate-shaped and is provided with a protruding portion protruding in a direction away from the cover plate, and in the thickness direction, the protruding portion and the cover plate are disposed at an interval.

8. The battery according to claim 7, wherein the beam structure is provided with a plurality of the protruding portions, the plurality of protruding portions extend along a first direction and are disposed at intervals in a second direction, the first direction, the second direction and the thickness direction intersect pairwise, and the connection holes are provided in the protruding portions.

9. The battery according to claim 5, wherein in the thickness direction, an orthographic projection of the beam structure is located within a contour range of an orthographic projection of the cover plate.

10. The battery according to claim 5, wherein the beam structure is integrally formed with the cover plate.

11. The battery according to any one of claims 3 to 10, wherein the cover plate comprises at least one of steel, aluminum, and alloys thereof, and a thickness of the cover plate is 0.1 mm to 25 mm.

12. The battery according to any one of claims 1 to 10, wherein the box body comprises a bearing plate, a frame body, and a bottom plate, the frame body is connected between the bearing plate and the bottom plate, the power distribution box is disposed on an upper side of the bearing plate, and the battery cell is fixed to the bearing plate.

13. The battery according to claim 12, wherein one side of the battery cell away from the bearing plate is provided with an electrode terminal and/or a pressure relief mechanism.

14. A power consuming apparatus, comprising the battery according to any one of claims 1 to 13, wherein the battery is configured to provide electric energy.

15. The power consuming apparatus according to claim 14, wherein the power consuming apparatus is a vehicle.

16. The power consuming apparatus according to claim 15, wherein the box body comprises a bearing plate, a frame body, and a bottom plate, the frame body is connected between the bearing plate and the bottom plate, the power distribution box is disposed on an upper side of the bearing plate, and the battery cell is fixed to the bearing plate; and
the bearing plate is at least a part of a floorboard of the vehicle.

17. The power consuming apparatus according to claim 15 or 16, wherein the vehicle comprises a seat, and the seat is connected to the support component.
